# EUROPEAN PATENT SPECIFICATION

(11) **EP 2 719 930 B1**
(45) Date of publication and mention of the grant of the patent: **15.02.2017**
(21) Application number: 12797319.6
(22) Date of filing: 24.04.2012
(51) Int. Cl.: F16J 15/34, F16J 15/447, F16J 15/00

(54) **SHAFT SEAL DEVICE**
WELLENDICHTUNGSVORRICHTUNG
DISPOSITIF D'ÉTANCHÉITÉ D'ARBRE

(30) Priority: 06.06.2011 JP 2011126544
(43) Date of publication of application: 16.04.2014
(73) Proprietor: Eagle Industry Co., Ltd., Minato-ku Tokyo 105-8587 (JP); EagleBurgmann Japan Co., Ltd., Tokyo 105-8587 (JP)
(72) Inventor: TAKAHASHI Hidekazu, Tokyo 105-8587 (JP); SUZUKI Shigeru, Tokyo 105-8587 (JP); TOJYO Toshinobu, Myoko-shi Niigata 944-8550 (JP)
(74) Representative: TBK
(86) International application number: PCT/JP2012/060936
(87) International publication number: WO 2012/169290

(56) References cited:
- EP-A1- 1 207 310
- EP-A1- 2 213 915
- JP-A- 5 231 548
- JP-A- 2000 046 198
- JP-A- 2000 329 238
- JP-A- 2008 082 354
- JP-U- 63 175 356

## Description

### TECHNICAL FIELD

The present invention relates to a shaft seal assembly for use in a vacuum drier or the like.

### BACKGROUND ART

In general, as a shaft seal assembly for sealing an annular gap between a rotating shaft and a shaft bore of a housing, those with gland packing and segmented seals are known. Applications with a vacuum drier or the like, however, exhibit harsh environment conditions including heavy rotating shafts and elevated temperatures. Such harsh conditions place a heavy load on sealing parts, degrading fitting of the sealing parts in a short period of time and consequently presenting disadvantages such as a need for frequent retightening for the above-mentioned sealing methods. Shaft seal assemblies using mechanical seals are also known (see Patent Document 1). However, mechanical seals pose a concern about an entry of wear debris, generated by sliding motion, into a sealed region. In addition, mechanical seals are generally provided with a spring or the like for pushing a rotating ring or a stationary ring axially. In applications with powder in a sealed region, the powder may leak and block the spring or the like, which may be thus prevented from exerting its functions.

A sealing method with fluid pressurized and circulated and a sealing method with gas purge are also known, but these methods are typically not suitable for any application with a vacuum in a sealed region.

EP 2 213 915 A1 discloses a tandem seal device with a shaft seal section housing 10 provided so as to enclose an outer circumference of a shaft sealing position of a rotary shaft 2 which comprises seal covers 12 to 14 connected each other in an axial direction by screw member 15 and 16. The primary mechanical seal device 30 comprises a rotary ring 31 and a stationary ring 33 arranged at an inner circumference of a seal cover 12 in the most internal side area of the shaft seal section housing 10, and does not rotate. The rotary ring 31 and the stationary ring 33 contact tightly at end faces which are facing each other by biasing force of a spring 37 in an axial direction to form sliding face 30S The secondary mechanical seal device 40 comprises a rotary ring 41 and a non-rotating stationary ring 46 provided at an inner circumferential of the seal cover 14 which is the most external side of the shaft seal section housing 10. The rotary ring 41 and the stationary ring 46 tightly contact with facing end faces by an axial direction biasing force of a spring 48 so as to form a sliding face 40S.

### PRIOR ART DOCUMENTS

### PATENT DOCUMENT

Patent Document 1: JP 4283296 B1

### SUMMARY OF THE INVENTION

### PROBLEMS TO BE SOLVED BY THE INVENTION

An object of the present invention is to provide a shaft seal assembly that can restrain an entry of foreign substances into a sealed region for an application with a vacuum in the sealed region.
The object is solved by the features defined in claim 1.

### MEANS FOR SOLVING THE PROBLEMS

To achieve the object described above, the present invention employs the following means.

That is, the present invention provides a shaft seal assembly for sealing an annular gap between a rotating shaft and a shaft bore of a housing and restraining a leak of powder from a sealed region having a vacuum, the shaft seal assembly including:
a first seal structure disposed at a sealed region side; and
a second seal structure disposed at an atmosphere side opposite the sealed region with respect to the first seal structure,
wherein the first seal structure includes a first stationary ring fixed (directly or indirectly) to the housing and a first rotating ring fixed (directly or indirectly) to the rotating shaft, the first seal structure being a non-contacting seal structure having a small gap between an end face of the first stationary ring at the atmosphere side and an end face of the first rotating ring at the sealed region side,
the second seal structure includes a second stationary ring fixed (directly or indirectly) to the housing and a second rotating ring fixed (directly or indirectly) to the rotating shaft, the second seal structure being a contacting seal structure in which an axial end face of the second stationary ring and an axial end face of the second rotating ring slide relative to each other,
a seal cover is fixed to the first stationary ring and the second stationary ring at an outer circumference side, the seal cover forming a sealed space between the first seal structure and the second seal structure, and
the shaft seal assembly includes a vacuum generating mechanism capable of providing a vacuum in the sealed space.

In the present invention, "the stationary ring" and "the rotating ring" may be each fabricated with a single component or multiple components.

According to the present invention, the first seal structure provided at the sealed region side is a non-contacting seal structure, and thus no wear debris is generated due to a sliding wear between the first stationary ring and the first rotating ring. Hence, no wear debris enters the sealed region as foreign substances. The sealed space between the first seal structure and the second seal structure is provided with a vacuum generated by the vacuum generating mechanism. Foreign substances inside the sealed space are therefore discharged to the outside of the sealed space. This can further restrain an entry of foreign substances into the sealed region. The vacuum in the sealed space can eliminate a differential pressure with the sealed region that has a vacuum. This can restrain powder from leaking from the sealed region and entering the sealed space, and can also restrain foreign substances from entering the sealed region from the sealed space. Even if powder leaks from the sealed region and enters the small gap between the end face of the first stationary ring at the atmosphere side and the end face of the first rotating ring at the sealed region side, the powder itself can function as a seal, further improving a sealing capability therebetween.

### EFFECTS OF THE INVENTION

As described above, the present invention can restrain an entry of foreign substances into a sealed region for an application with a vacuum in the sealed region.

### BRIEF DESCRIPTION OF THE DRAWINGS

Fig. 1 is a schematic cross-sectional view of a shaft seal assembly, in general, according to an embodiment of the present invention.
Fig. 2 is a schematic cross-sectional view of a first seal structure according to the embodiment of the present invention.
Figs. 3(a) to 3(c) are diagrams of a manner in which components of the first seal structure according to the embodiment of the present invention are assembled.
Fig. 4 is a schematic cross-sectional view of a second seal structure according to the embodiment of the present invention.

### MODES FOR CARRYING OUT THE INVENTION

An exemplary embodiment of the present invention will now be described in detail with reference to the drawings. Note that dimensions, materials, shape, and relative arrangement of components described in this embodiment should not be taken to limit the invention to the specific embodiment unless otherwise specified.

### (Embodiment)

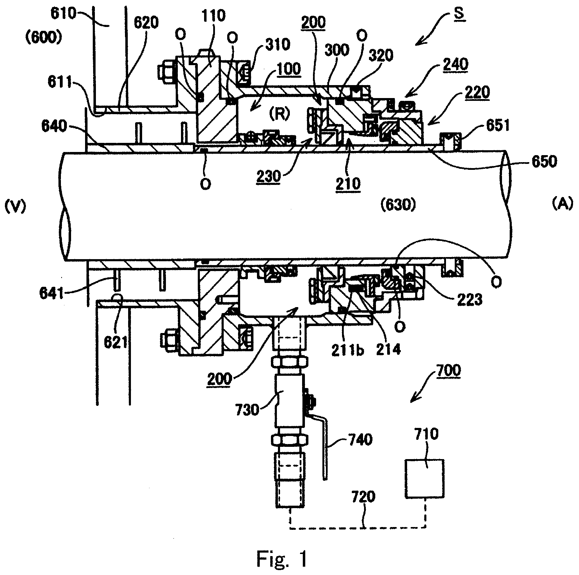

With reference to Figs. 1 to 4, a shaft seal assembly according to an embodiment of the present invention will be described. A shaft seal assembly according to this embodiment is used with a vacuum drier for sealing an annular gap between a rotating shaft for rotating a screw to transport powder in a sealed region, having a vacuum, of the vacuum drier and a shaft bore formed in a housing of the vacuum drier.

### <Shaft seal assembly in general>

With reference particularly to Fig. 1, an outline of the vacuum drier and an overall configuration of the shaft seal assembly according to the embodiment of the present invention will be described below.

A vacuum drier 600 includes a casing 610 having an opening 611, and an annular housing 620 is attached to the opening 611. The housing 620 has a shaft bore 621 through which a rotating shaft 630 is inserted. The rotating shaft 630 includes a screw 640 including a screw blade 641. The rotating shaft 630 is provided with a sleeve 650 that is adjacent to the screw 640 and is positioned and fixed by a setscrew 651 to the rotating shaft 630. An O-ring O is disposed between an inner circumferential surface of the sleeve 650 and an outer circumferential surface of the rotating shaft 630 to provide a seal. The interior of the casing 610 is a sealed region, and the casing is structured to maintain a vacuum in the sealed region and contains powder therein. The sealed region is configured to be heated.

With the structure described above, the rotating shaft 630 rotates the screw 640 to transport the powder axially. The powder is dried, while being transported, due to evaporation of moisture.

The shaft seal assembly S according to this embodiment includes a first seal structure 100 disposed at a sealed region side V and a second seal structure 200 disposed at an atmosphere side A that is opposite the sealed region with respect to the first seal structure 100. The shaft seal assembly S also includes a seal cover 300 to form a sealed space R between the first seal structure 100 and the second seal structure 200. The seal cover 300 is fixed to a first stationary ring 110, provided in the first seal structure 100, at an outer circumference side and to a second stationary ring 210, provided in the second seal structure 200, at an outer circumference side by setscrews 310 and 320, respectively.

The shaft seal assembly S includes a vacuum generating mechanism 700. The vacuum generating mechanism 700 includes a pump 710, a pipe 720 connected to the pump 710, and a ball valve 730 disposed between the pipe 720 and the seal cover 300. The ball valve 730 is provided with a handle 740 for opening and closing the valve when the handle 740 is operated. With the structure described above, while the pump 710 is driven, the ball valve 730 is opened with the handle 740 to generate a vacuum in the sealed space R in order to provide a vacuum in the sealed space R. In this embodiment, a vacuum is generated in the sealed space R constantly or intermittently.

### <First seal structure>

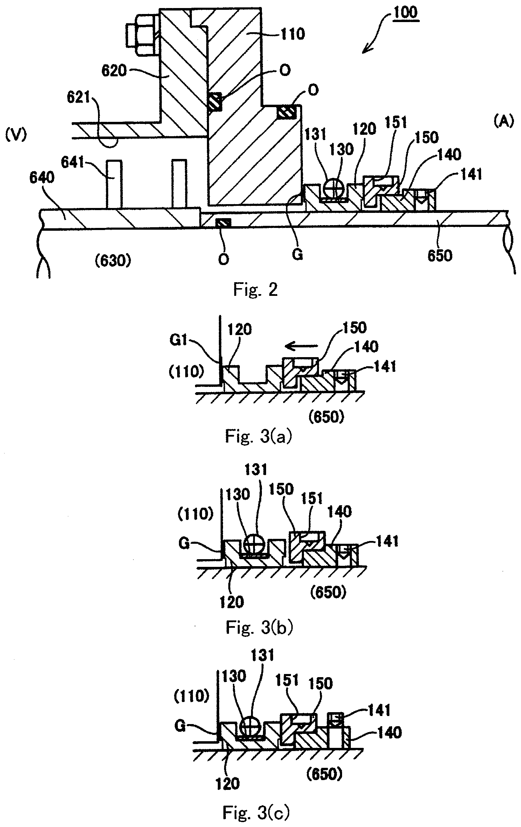

With reference particularly to Figs. 2 and 3, the first seal structure 100 according to the embodiment will be described in more detail below.

The first seal structure 100 is a non-contacting seal structure. More specifically, the first seal structure 100 includes the first stationary ring 110 fixed to the housing 620 and a first rotating ring 120 fixed to the rotating shaft 630. The first stationary ring 110 is fixed to the housing 620 directly. An O-ring O is each disposed between the first stationary ring 110 and the housing 620 and between the first stationary ring 110 and the seal cover 300 to provide a seal. The first rotating ring 120 is fixed to the sleeve 650 that is fixed to the rotating shaft 630; the first rotating ring 120 is fixed to the rotating shaft 630 indirectly.

The first stationary ring 110 and the first rotating ring 120 are positioned so as to provide a small gap G between an end face of the first stationary ring 110 at the atmosphere side A and an end face of the first rotating ring 120 at the sealed region side V. A manner in which these components are positioned will be described with reference particularly to Fig. 3.

A positioning sleeve 140 for positioning the first rotating ring 120 on the sleeve 650 is temporarily fixed, by a setscrew 141, to the sleeve 650 that is fixed to the rotating shaft 630. A sleeve collar 150, which is movable axially by rotation, is attached to the positioning sleeve 140. The positioning sleeve 140 and the sleeve collar 150 are mutually connected through a threaded mechanism. The sleeve collar 150 is thus moved axially with respect to the positioning sleeve 140 when the sleeve collar 150 is rotated with a tool located in a hole 151 formed in an outer periphery of the sleeve collar 150.

With the positioning sleeve 140 temporarily fixed, the sleeve collar 150 is rotated in a forward direction to be moved toward the left in Fig. 3, and a thickness gauge G1 is then inserted between the first stationary ring 110 and the first rotating ring 120. The thickness gauge G1 is a thin, platelike material with a desired thickness. When a desired dimension is achieved for a gap between the first stationary ring 110 and the first rotating ring 120 by the thickness gauge G1 inserted between the rings, a position of the first rotating ring 120 is defined (see Fig. 3(a)).

When the position of the first rotating ring 120 is defined, a hose band 130 is attached to tighten and fix the first rotating ring 120 to the sleeve 650. Here, a clamp 131 provided on the hose band 130 is rotated so that the hose band 130 can tighten the first rotating ring 120. When the first rotating ring 120 is fixed, the thickness gauge G1 is then removed to provide a small gap G of the desired dimension between the first stationary ring 110 and the first rotating ring 120. Subsequently, the sleeve collar 150 is rotated in a reverse direction to be moved toward the right in Fig. 3, and the sleeve collar 150 is then fixed to the positioning sleeve 140 by threaded fastening (see Fig. 3(b)).

The setscrew 141 is then loosened. The positioning sleeve 140 is then moved toward the left in the figure up to a position where the sleeve collar 150 comes in contact with the first rotating ring 120 (see Fig. 3(c)), and the positioning sleeve 140 is fixed to the sleeve 650 again with the setscrew 141.

In the manner described above, the first rotating ring 120 is positioned and fixed to the sleeve 650. Meanwhile, the small gap G with the desired dimension is provided between the first stationary ring 110 and the first rotating ring 120.

### <Second seal structure>

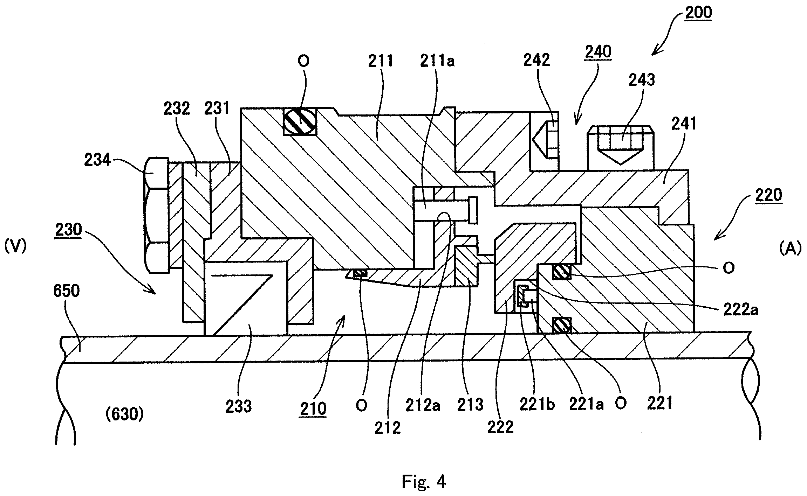

With reference particularly to Fig. 4, the second seal structure 200 according to the embodiment will be described in more detail below.

The second seal structure 200 is a contacting seal structure. More specifically, the second seal structure 200 includes the second stationary ring 210 fixed to the housing 620 and a second rotating ring 220 fixed to the rotating shaft 630. The second stationary ring 210 is fixed indirectly to the housing 620 through components including the seal cover 300. The second rotating ring 220 is fixed indirectly to the rotating shaft 630 through the sleeve 650.

The second stationary ring 210 includes an annular flange 211 fixed to an inner circumferential surface of the seal cover 300 with the setscrew 320, an annular retainer 212 configured to move axially with respect to the flange 211, and an annular seal ring 213 fixed to the retainer 212. An O-ring O is disposed between an outer circumferential surface of the flange 211 and the inner circumferential surface of the seal cover 300 to provide a seal. The retainer 212 is an annular component having a substantially L-shaped cross-section. The retainer 212 has a through hole 212a in a disk portion thereof, and is configured to move axially along a drive pin 211a, fixed to the flange 211, by allowing the drive pin 211a to pass through the through hole 212a. The flange 211 has an attaching hole 211b in an end face at the atmosphere side, and a spring 214 is attached in the attaching hole 211b (see Fig. 1). The spring 214 pushes the retainer 212 toward the right in the figure. An O-ring O is disposed between an outer circumferential surface of a cylindrical portion of the retainer 212 and an inner circumferential surface of the flange 211 to provide a seal.

The second rotating ring 220 includes an annular collar 221 fixed to the sleeve 650 and an annular mating ring 222 fixed to the collar 221 while engaging with the collar 221. The mating ring 222 has a substantially L-shaped cross-section. In the mating ring 222, an end face of a disk portion at the atmosphere side A and an inner circumferential surface of a cylindrical portion are in close contact with an end face at the sealed region side V and an outer circumferential surface of the collar 221, respectively. The mating ring 222 has a recess 222a at the disk portion, and the recess 222a accommodates a drive pin 221a fixed to the collar 221. The drive pin 221a is provided with a cap 221b attached to an end thereof for preventing damage to the mating ring 222. An O-ring O is each provided between an inner circumferential surface of the collar 221 and an outer circumferential surface of the sleeve 650 and between the outer circumferential surface of the collar 221 and the inner circumferential surface of the cylindrical portion of the mating ring 222 to provide a seal.

With the structure described above, the collar 221 rotates as the rotating shaft 630 rotates, and a rotational torque of the collar 221 is transmitted through the drive pin 221a to the mating ring 222, thus rotating the mating ring 222. Meanwhile, the seal ring 213 of the second stationary ring 210 and the mating ring 222 of the second rotating ring 220 slide relative to each other. As described above, the spring 214 pushes the retainer 212 toward the right in the figure, consequently pushing the seal ring 213, fixed to the retainer 212, against the mating ring 222. This keeps the seal ring 213 and the mating ring 222 stably sliding relative to each other. Sliding portions of the seal ring 213 and the mating ring 222 provide a seal capable of resisting a differential pressure of about 0.1 MPa (about 1 atm). In order to maintain the sliding performance even in a dry condition, a publicly known coating with a good self-lubrication is applied to sliding surfaces of the seal ring 213 and the mating ring 222.

In this embodiment, a sealing subassembly 230 is provided at an edge of the second stationary ring 210 at the sealed region side V. The sealing subassembly 230 includes a case 231 and a plate 232 which are fixed to the flange 211 with a bolt 234, and a sealing body 233 fixed by the case 231 and the plate 232. The sealing body 233 may be a publicly known seal capable of providing a sealing capability when the sealing body 233 is sliding relative to the outer circumference surface of the sleeve 650. The sealing subassembly 230 provided at the edge of the second stationary ring 210 at the sealed region side V thus allows a space including the sliding portions of the seal ring 213 and the mating ring 222 to be isolated from the sealed space R. This can restrain powder that has entered the sealed space R from reaching the sliding portions of the seal ring 213 and the mating ring 222.

As described above, the mating ring 222 of the second rotating ring 220 is being pushed by the seal ring 213 of the second stationary ring 210. Hence, a jig subassembly 240 is used to fix the second rotating ring 220 to the sleeve 650. That is, to attach the second rotating ring 220, a jig body 241 is fixed to the flange 211 and the collar 221 with setscrews 242 and 243, respectively. In other words, the second rotating ring 220 is temporarily fixed to the second stationary ring 210. The collar 221 of the second rotating ring 220 is then fixed to the sleeve 650 with a setscrew 223 (see Fig. 1). The setscrews 242 and 243 are then loosened to remove the jig subassembly 240. The jig body 241 has a two-piece structure for ease of assembly and disassembly.

### <Excellent points of a shaft seal assembly according to the embodiment>

According to the shaft seal assembly S of this embodiment, the first seal structure 100 provided at the sealed region side V is a non-contacting seal structure, and thus no wear debris is generated due to a sliding wear between the first stationary ring 110 and the first rotating ring 120. Hence, no wear debris enters the sealed region as foreign substances.

The sealed space R between the first seal structure 100 and the second seal structure 200 is provided with a vacuum generated by the vacuum generating mechanism 700. Foreign substances inside the sealed space R are therefore discharged to the outside of the sealed space R. This can further restrain an entry of foreign substances into the sealed region.

A vacuum in the sealed space R can eliminate a differential pressure with the sealed region that has a vacuum. This can restrain powder from leaking from the sealed region and entering the sealed space R, and can also restrain foreign substances from entering the sealed region from the sealed space R.

Even if powder leaks from the sealed region and enters the small gap G between the end face of the first stationary ring 110 at the atmosphere side and the end face of the first rotating ring 120 at the sealed region side, the powder itself can function as a seal, further improving a sealing capability therebetween. A dimension of the small gap G set smaller than a particle size of powder inside the sealed region can theoretically prevent the powder from leaking through the small gap G into the sealed space R. A dimension of the small gap G set similar to the particle size of the powder inside the sealed region can let the powder enter the small gap G to function itself as a seal as described above. The small gap G has a sealing function, and thus, obviously, the dimension of the small gap G may not be set to a size easily allowing the powder inside the sealed region to pass therethrough.

According to the embodiment, no moving component is provided within the sealed space R. In other words, the spring 214 and the drive pins 211a and 221a are provided outside the sealed space R. In addition, in the first seal structure 100, the first rotating ring 120 is fixed with the hose band 130. Consequently, even if powder leaks into the sealed space R, the powder does not have any adverse effect on any operation of the components.

The first seal structure 100 and the second seal structure 200 provide so-called "end face seals," and thus sealing capabilities are maintained even when the rotating shaft 630 is bent and misaligned.

### EXPLANATION OF REFERENCE NUMERALS

- 100: first seal structure
- 110: first stationary ring
- 120: first rotating ring
- 130: hose band
- 131: clamp
- 140: positioning sleeve
- 141: setscrew
- 150: sleeve collar
- 151: hole
- 200: second seal structure
- 210: second stationary ring
- 211: flange
- 211a: drive pin
- 211b: attaching hole
- 212: retainer
- 212a: through hole
- 213: seal ring
- 214: spring
- 220: second rotating ring
- 221: collar
- 221a: drive pin
- 221b: cap
- 222: mating ring
- 223: setscrew
- 230: sealing subassembly
- 231: case
- 232: plate
- 233: sealing body
- 234: bolt
- 240: jig subassembly
- 241: jig body
- 242, 243: setscrew
- 300: seal cover
- 310, 320: setscrew
- 600: vacuum drier
- 610: casing
- 611: opening
- 620: housing
- 621: shaft bore
- 630: rotating shaft
- 640: screw
- 641: screw blade
- 650: sleeve
- 651: setscrew
- 700: vacuum generating mechanism
- 710: pump
- 720: pipe
- 730: ball valve
- 740: handle
- G: small gap
- G1: thickness gauge
- O: O-ring
- R: sealed space
- S: shaft seal assembly

## Claims

1. A shaft seal assembly for sealing an annular gap between a rotating shaft (630) and a shaft bore (621) of a housing (620) and restraining a leak of powder from a sealed region (V) having a vacuum,
the shaft seal assembly comprising:
a first seal structure (100) disposed at a sealed region side; and
a second seal structure (200) disposed at an atmosphere side (A) opposite the sealed region with respect to the first seal structure,
a seal cover (300) is fixed to the first stationary ring (110) and the second stationary ring (210) at an outer circumference side, the seal cover forming a sealed space (R) between the first seal structure and the second seal structure,
**characterized in that**
the shaft seal assembly comprises a vacuum generating mechanism (700) capable of providing a vacuum in the sealed space (R),
wherein the first seal structure comprises a first stationary ring (110) fixed to the housing (620) and a first rotating ring (120) fixed to the rotating shaft, the first seal structure being a non-contacting seal structure having a small gap (G) between an end face of the first stationary ring (110) at the atmosphere side and an end face of the first rotating ring (120) at the sealed region side,
the second seal structure comprises a second stationary ring (210) fixed to the housing and a second rotating ring (220) fixed to the rotating shaft, the second seal structure being a contacting seal structure in which an axial end face of the second stationary ring and an axial end face of the second rotating ring slide relative to each other.

## Patentansprüche

1. Wellendichtungsanordnung zum Abdichten eines Ringspalts zwischen einer Drehwelle (630) und einer Wellenbohrung (621) eines Gehäuses (620) und ein Austreten von Pulver aus einem abgedichteten Bereich (V) mit einem Vakuum zu verhindern,
wobei die Wellendichtungsanordnung aufweist:
eine erste Dichtungsstruktur (100), die auf einer Seite eines abgedichteten Bereichs angeordnet ist; und
eine zweite Dichtungsstruktur (200), die auf einer Atmosphärenseite (A) bezüglich der ersten Dichtungsstruktur gegenüber dem abgedichteten Bereich angeordnet ist,
eine Dichtungsabdeckung (300), die an dem ersten stationären Ring (110) und dem zweiten stationären Ring (210) an einer Außenumfangsseite befestigt ist, wobei die Dichtungsabdeckung einen abgedichteten Raum (R) zwischen der ersten Dichtungsstruktur und der zweiten Dichtungsstruktur ausbildet,
**dadurch gekennzeichnet, dass**
die Wellendichtungsanordnung einen Vakuumerzeugungsmechanismus (700) aufweist, der in der Lage ist, ein Vakuum in dem abgedichteten Raum (R) bereitzustellen,
wobei die erste Dichtungsstruktur einen an dem Gehäuse (620) befestigten ersten stationären Ring (110), und einen an der Drehwelle befestigt ersten Drehring (120) aufweist, wobei die erste Dichtungsstruktur eine kontaktlose Dichtungsstruktur mit einem kleinen Spalt (G) zwischen einer Stirnfläche des ersten stationären Rings (110) auf der Atmosphärenseite und einer Stirnfläche des ersten Drehrings (120) auf der Seite des abgedichteten Bereichs ist,
die zweite Dichtungsstruktur einen an dem Gehäuse befestigten zweiten stationären Ring (210) und einen an der Drehwelle befestigten zweiten Drehring (220) aufweist, wobei die zweite Dichtungsstruktur eine berührende Dichtungsstruktur ist, in der eine axiale Endfläche des zweiten stationären Rings und eine axiale Endfläche des zweiten Drehrings relativ zueinander gleiten.

## Revendications

1. Ensemble de joint d'étanchéité d'arbre pour réaliser l'étanchéité d'un espace annulaire entre un arbre rotatif (630) et un alésage d'arbre (621) d'un boîtier (620) et contenir une fuite de poudre d'une région étanche (V) présentant un vide,
l'ensemble de joint d'étanchéité d'arbre comprenant :
une première structure de joint d'étanchéité (100) disposée du côté de la région étanche ; et
une seconde structure de joint d'étanchéité (200) disposée du côté de l'atmosphère (A) opposé à la région étanche par rapport à la première structure de joint d'étanchéité,
un couvercle de joint d'étanchéité (300) est fixé à la première bague fixe (110) et à la seconde bague fixe (210) du côté de la circonférence externe, le couvercle de joint d'étanchéité formant un espace étanche (R) entre la première structure de joint d'étanchéité et la seconde structure de joint d'étanchéité,
**caractérisé en ce que** :
l'ensemble de joint d'étanchéité d'arbre comprend un mécanisme de génération de vide (700) capable de fournir un vide dans l'espace étanche (R),
dans lequel la première structure de joint d'étanchéité comprend une première bague fixe (110) fixée sur le boîtier (620) et une première bague rotative (120) fixée à l'arbre rotatif, la première structure de joint d'étanchéité étant une structure de joint d'étanchéité sans contact ayant un petit espace (G) entre une face d'extrémité de la première bague fixe (110) du côté de l'atmosphère et une face d'extrémité de la première bague rotative (120) du côté de la région étanche,
la seconde structure de joint d'étanchéité comprend une seconde bague fixe (210) fixée sur le boîtier et une seconde bague rotative (220) fixée sur l'arbre rotatif, la seconde structure de joint d'étanchéité étant une structure de joint d'étanchéité avec contact dans laquelle une face d'extrémité axiale de la seconde bague fixe et une face d'extrémité axiale de la seconde bague rotative coulissent l'une par rapport à l'autre.
